Europäisches Patentamt

European Patent Office

Office européen des brevets

(19)

(11) Publication number: **0 196 545 B1**

# EUROPEAN PATENT SPECIFICATION

(45) Date of publication of patent specification: **10.06.92**  (51) Int. Cl.5: **A01B 33/14**

(21) Application number: **86103655.6**

(22) Date of filing: **18.03.86**

(54) **Cultivator nail supporting structure.**

(30) Priority: **29.03.85 JP 44964/85**

(43) Date of publication of application:
**08.10.86 Bulletin 86/41**

(45) Publication of the grant of the patent:
**10.06.92 Bulletin 92/24**

(84) Designated Contracting States:
**DE FR GB IT**

(56) References cited:
**DE-U- 7 200 898        FR-A- 2 527 415**
**GB-A- 2 128 461        JP-A- 575 601**
**US-A- 3 589 452        US-A- 4 183 231**

(73) Proprietor: **Taiyo Tanko Co.,Ltd.**
**3-7, Shinonomecho**
**Kohchi-shi Kohchi-ken(JP)**

(72) Inventor: **Doi, Sadao Taiyo Tanko Co. Ltd.**
**3-7, Shinonomecho**
**Kohchi-shi Kohchi-ken(JP)**
Inventor: **Yamada, Tohru Taiyo Tanko Co. Ltd.**
**3-7, Shinonomecho**
**Kohchi-shi Kohchi-ken(JP)**
Inventor: **Matsumoto, Shungo Taiyo Tanko**
**Co. Ltd.**
**3-7, Shinonomecho**
**Kohchi-shi Kohchi-ken(JP)**
Inventor: **Yamamoto, Taizo Taiyo Tanko Co.**
**Ltd.**
**3-7, Shinonomecho**
**Kohchi-shi Kohchi-ken(JP)**

(74) Representative: **Patentanwälte Grünecker,**
**Kinkeldey, Stockmair & Partner**
**Maximilianstrasse 58**
**W-8000 München 22(DE)**

# Description

## BACKGROUND OF THE INVENTION

### 1. Field of the Invention

The present invention relates to a cultivator nail supporting structure according to the preamble of claims 1,2,3, and 6, in which structure a nail of a cultivator can easily be attached to and removed from the structure.

### 2. Description of the Prior Art

Nails of a cultivator are fitted to the cultivator by inserting a held portion located at one end of each nail into each of a plurality of nail holders projecting from the periphery of a rotation shaft for rotating the nails. As and when required, all the nails attached to the nail holders are removed and replaced with other nails which have different blade shapes.

Figures 1 and 2 show a cultivator nail supporting structure according to a prior art known from JP-A-557-5601. On a periphery 2 of a cultivator nail rotation shaft (hereinafter called only the "rotation shaft") 1, there projects a nail holder 3. The cross section of a hollow portion 4 of the nail holder 3 perpendicular to an axis X-X of the nail holder 3 has a rhombic shape or a shape of two wedges facing each other. Into the hollow portion 4, a held portion 6 located at one end of a cultivator nail 5 is inserted. The cross section of the held portion 6 has a rhombic shape same as the cross section of the hollow portion. The held portion 6 is fitted to the nail holder 3 with a pin 7 which is provided in parallel with the rotation shaft and passed through the nail holder. The held portion 6, i.e., the cultivator nail 5 is pivotable around the pin 7.

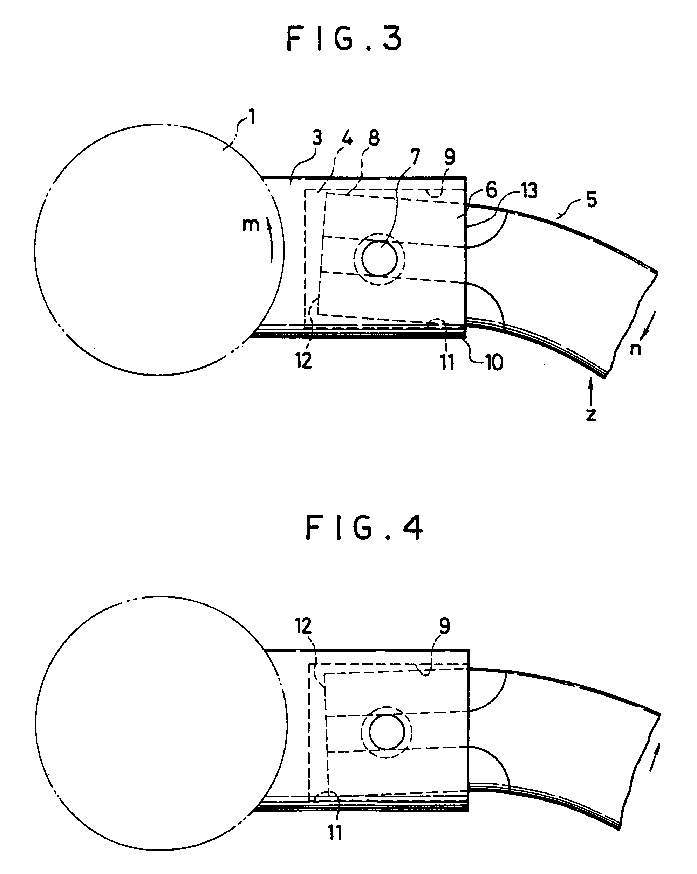

If the rotation shaft 1 rotates in a direction indicated by an arrow "m" shown in Fig. 3, the cultivator nail 5 is turned together in the same direction. When the inner side of the other end (not shown) of the cultivator nail 5 hits the ground, the cultivator nail 5 is turned in a direction indicated by an arrow "n" around the pin 7. As a result, the held portion 6 in the hollow portion 4 is turned with respect to the nail holder 3 in a direction opposite to the rotating direction of rotation shaft 1. The upper end of the edge of held portion 6 (Fig. 3) is moved upwardly toward an upper end portion 9 of the hollow portion 4, while a lower end 10 on blade side of the held portion is moved toward a lower end portion 11 of the hollow portion 4. At both portions, the wedge shape portions of held portion 6 are pushed in the wedge shape portions of the hollow portion 4.

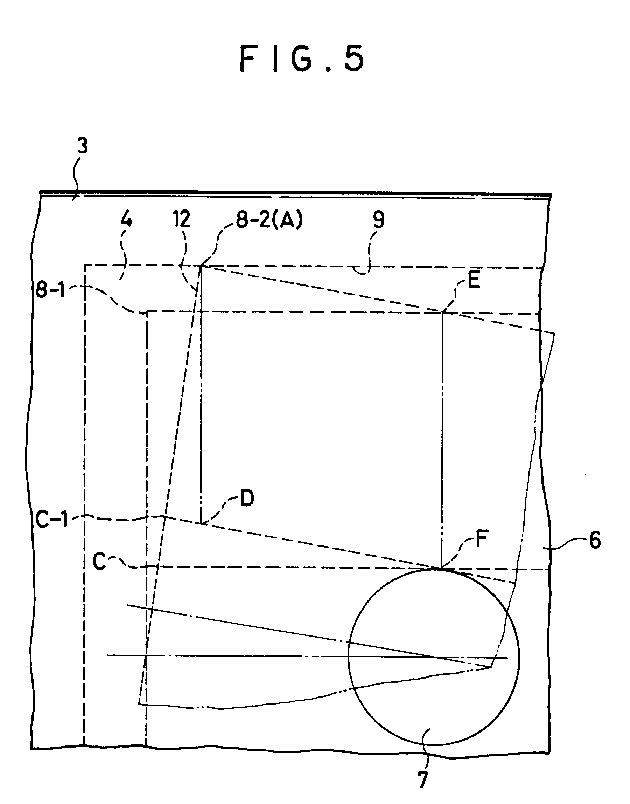

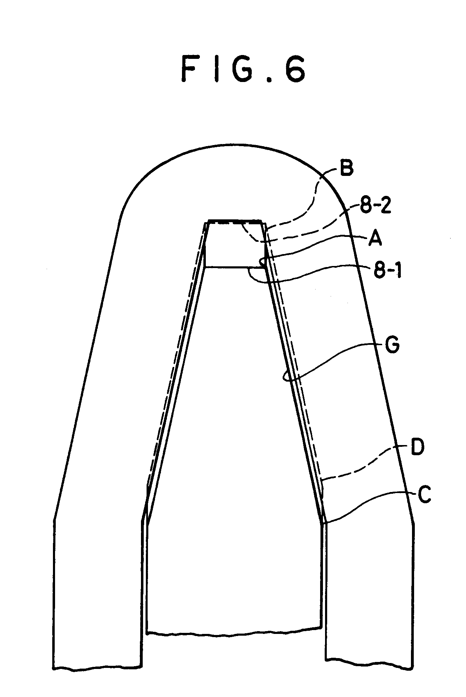

A contacting state of the side faces of hollow portion 4 and the side faces of held portion 6 under the above-mentioned situation is shown in Figs. 5 and 6 which are enlarged view of the left half of Fig. 3. An upper end 8-1 of an edge 12 of the held portion 6 moves to a position 8-2. Namely, in Fig. 6, a corner portion A of the upper end 8-1 moves to a position B, while a corner portion C on the center side moves to a position C-1. Therefore, a square shape ADFE shown in Fig. 5 is indicated by a rectangular shape BDCA in Fig. 6. A portion outside a face G of the wedge shape portion of hollow portion 4, i.e., about the half of the square shape ADFE is in planar contact with the wedge shape portion of the hollow portion.

Initially, the edge 12 of held portion 6 contacts the hollow portion due to the resilient deformation of the nail holder, but, due to the abrasion of the contacting position, the contacting point is gradually increased to make planar contact as shown in Fig. 6.

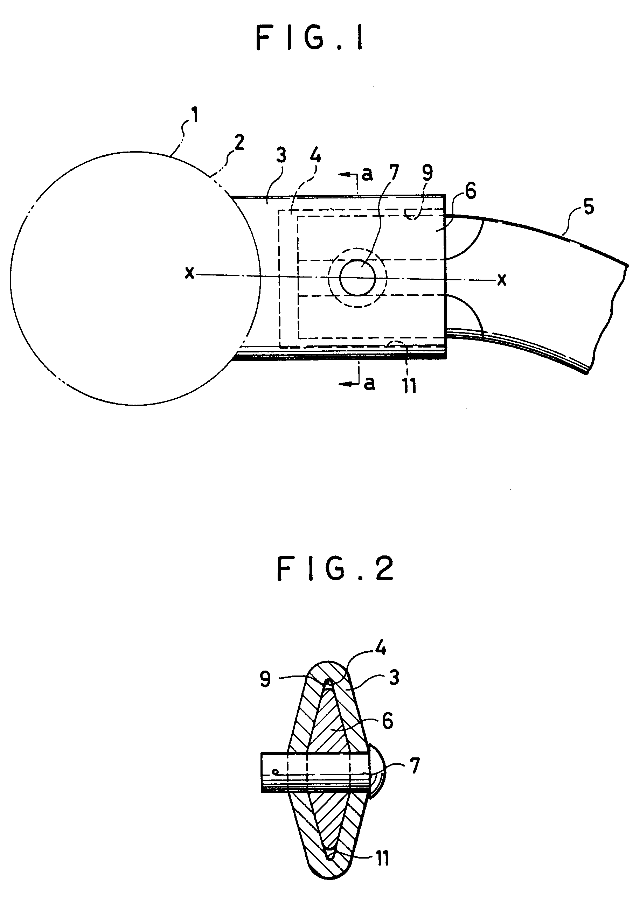

The above-mentioned situation is also caused on the right-lower side of pin 7. According to the increase of the area of planar contact, the cultivator nail shall be hit strong in the direction of an arrow Z shown in Fig. 3 to take the held portion out of the wedge shape portion of the hollow portion. As a result, the held portion taken out of the wedge shape portion passes a neutral position shown in Fig. 1 to become a state shown in Fig. 4, and is held again by the hollow portion. Therefore, the cultivator nail shall be reciprocated several times to bring the same to the neutral position to remove the nail from the nail holder.

As mentioned in the above, the prior art supporting structure of cultivator nail is not easy in removing the cultivator nail and requires a long time to do so.

It is an object of the present invention to provide a cultivator nail supporting structure, which realizes to remove the cultivator nail easily in a short time.

This object is achieved by the characterizing parts of claims 1, 2, 3 and 6, respectively.

The subclaims contain preferred embodiments of the present invention.

These and other objects, features and advantages of the present invention will become apparent from the following description of preferred embodiments in conjunction with the accompanying drawings in which:

Fig. 1 is a side view showing a prior art;

Fig. 2 is a cross-sectional view taken along the line a-a shown in Fig. 1;

Figs. 3 and 4 are views describing the operation of a held portion of a nail received in a hollow portion of a nail holder according to the prior art;

Figs. 5 and 6 are views describing the contacting state of a side face of the held portion and a wedge shape portion of the hollow portion at the time of rotation of the held portion according to the prior art;

Fig. 7 is a side view showing the first embodiment of the present invention;

Figs. 8 and 9 are cross-sectional views taken along the lines II-II and III-III respectively shown in Fig. 7;

Fig. 10 is a cross-sectional view showing the second embodiment according to the present invention;

Fig. 11 is a side view showing the held portion shown in Fig. 10;

Fig. 12 is a side view showing the main part of a cultivator nail supporting structure according to the third embodiment of the present invention;

Fig. 13 is a cross-sectional view taken along the line II-II shown in Fig. 12;

Fig. 14 is a side view showing the main part of a cultivator nail supporting structure according to the fourth embodiment of the present invention;

Fig. 15 is a cross-sectional view taken along the line IV-IV shown in Fig. 14;

Fig. 16 is a cross-sectional view taken along the line V-V shown in Fig. 14;

Fig. 17 is a side view showing the main part of a cultivator nail supporting structure according to the fifth embodiment of the present invention;

Fig. 18 is a cross-sectional view taken along the line VII-VII shown in Fig. 17; and

Fig. 19 is a cross-sectional view taken along the line IIX-IIX shown in Fig. 17.

DETAILED DESCRIPTION OF THE EMBODIMENTS

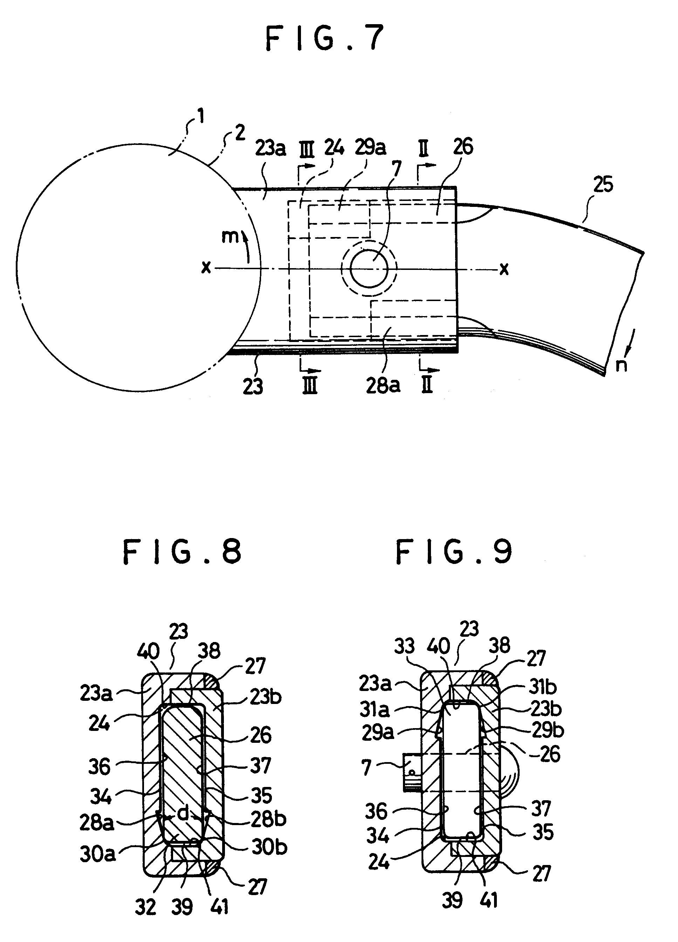

Figure 7 is a side view in which a held portion is fitted to a nail holder according to the first embodiment of the present invention. Figures 8 and 9 are cross-sectional views taken along the lines II-II and III-III respectively shown in Fig. 7.

Similar to Fig. 1, the numerals 1, 2, and 7 represent a cultivator nail rotation shaft, a periphery thereof, and a stopper pin respectively. The numeral 23 represents the nail holder which is constituted by welding with beads 27 channel members 23a and 23b facing each other. The numeral 24 is a hollow portion of the nail holder 23; 25 a cultivator nail; and 26 a held portion located at one end of the cultivator nail 25. When the cultivator nail 25 is rotated around the pin 7 in a direction (arrow "n") opposite to the direction of rotation of the rotation shaft 1 (arrow "m"), the held portion 26 abuts against the hollow portion 24. At this abutting positions (Fig. 3) shown in cross sections orthogonal to the axis X-X of the nail holder 23, the hollow portion 24 has faces 28a and 28b which are located on the side of an opening of nail holder 3 from the pin 7 and the lower side of the opening, as well as having faces 29a and 29b which are located on the side of the rotation shaft 1 from the pin 7 and the upper side of the rotation shaft 1, said faces being provided as wedge shape portions having an intersection angle of about 45° respectively. The held portion 26 is formed in a rectangular shape as shown in Fig. 8. In the above-mentioned reverse rotational movement, the held portion 26 contacts the faces 28a and 28b, and 29a and 29b through points 30a and 30b, and 31a and 31b, said contacting portions being formed in arcuate shapes to make point contacts.

Fitted portions 32 and 33 have the arcuate portions on both sides thereof.

The cross section of the hollow portion, except the wedge shape portion, is formed by parallel faces 36 and 37 which are located in the vicinity of the side faces 34 and 35 of the held portion 26 to release the holding pressure, and by flat end faces 40 and 41 which are in parallel with longitudinal upper end face 38 and lower end face 39 of the held portion 26. As shown in Fig. 8 on the right side of pin 7 (Fig. 7), the end face 39 of the hollow portion becomes a stopper position. Further, as shown in Fig. 9 on the left side of pin 7, the end face 40 of the hollow portion becomes another stopper position. When the cultivator nail is strongly rotated in the direction of arrow "n", the upper end face 38 of the held portion becomes an abutting position to abut against the end face 40 of the hollow portion, while the member 1 or the lower end face 39 of the held portion becomes another abutting portion to abut against the end face 41 of the hollow portion. In this case, the size of gap between the faces 38 and 40, and the size of gap between the faces 39 and 41 shall be so selected that the holding pressure of the fitted portions 32 and 33 does not exceed a predetermined value. When the cultivator nail is rotated around the pin 7 in the same direction as the rotational direction of the rotation shaft, the upper end face 38 of the held portion abuts against the flat end face 40 of the hollow portion on the right side of the pin 7 as shown in Fig. 8, while, on the left side of the pin 7, the lower end face 39 of the held portion abuts against the flat end face 41 of the hollow portion as shown in Fig. 9 so that the held portion may not be fitted.

According to the first embodiment of the present invention, the portions 32 and 33 to be held of the held portion is held with pressure by the wedge shape portion of the hollow portion when the cultivator nail is rotated together with the rotation shaft to cultivate the ground so that the nail may be firmly fitted to the hollow portion without play. Since the pressure holding state is substantially the point contacting state, the cultivator nail can be removed in a short time in comparison with the planar contacting state.

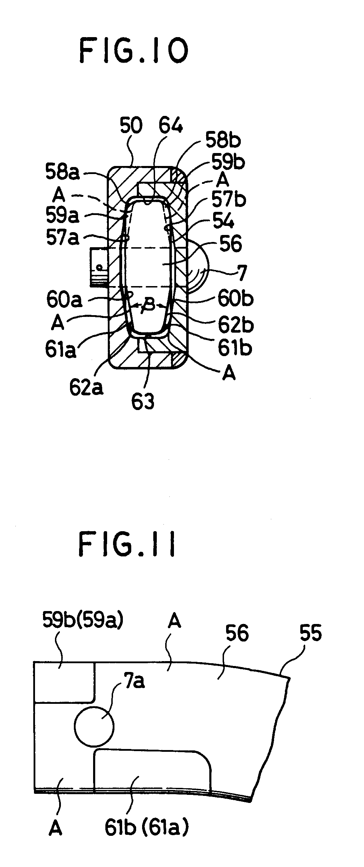

Figures 10 and 11 show the second embodiment of the present invention. Figure 10 is a cross-sectional view taken along a line located the same position as the line III-III shown in Fig. 7. Figure 11 is a side view showing the held portion shown in Fig. 10.

The constitution of this embodiment differs from that of the first embodiment in the following point. On the right and left sides of the pin 7 in the first embodiment, the cross-sectional shape of the held portion has not been changed, but the cross-sectional shape of the hollow portion has been changed. In the second embodiment, however, the cross-sectional shape of the hollow portion is not changed on the right and left sides of the pin 7, but the cross-sectional shape of the held portion of a cultivator nail 55 is changed.

Namely, the cross-sectional shape of the hollow portion 54 of the nail holder 50 is at any location of two cups being faced each other. The held portion 56, on its upper part of edge side (left side in Fig. 11) from a pin hole 7a, has projections 59a and 59b which have arcuate portions 58a and 58b respectively contacting through contacting points the faces 57a and 57b respectively of the wedge shape portion of the upper side of the hollow portion, while, on the right side of the pin hole 7a, the held portion 56 has projections 62a and 62b which have arcuate portions 61a and 61b respectively contacting through contacting points the faces 60a and 60b respectively of the wedge shape portions of the lower side of the hollow portion, thereby constituting pressure supporting portions. The portions other than the projections 59a and 59b, and 62a and 62b of the held portion 56 are spaced apart from the inner surface of the hollow portion with a proper gap as shown in Fig. 10 to constitute a fitting pressure releasing portion A together with a face which is in parallel with said inner surface.

In this embodiment, the intersection angle $\beta$ of both faces of the wedge shape portion is about 30°. The lower side end face 63 and upper side end face 64 of the hollow portion are flat which become stopper positions when the nails are rotated in a direction opposite to the rotational direction of the rotation shaft, and abutting positions when the nails are rotated in the same direction as the rotational direction of the rotation shaft.

Similar to the first embodiment, the second embodiment realizes to remove the cultivator nail from the nail holder easily in a short time due to the existence of the fitting pressure releasing portion A.

The present invention is not limited by the above-mentioned embodiments. For instance, the cultivator nail can be provided with a wedge shape portion, while the nail holder can be provided with an abutting portion which abuts locally against the wedge shape portion to constitute a fitting pressure supporting portion. In this case, a side opposite to the rotational direction of the cultivator nail 56 is formed not to abut against the nail holder 50 to constitute a fitting pressure releasing portion with respect to the fitting pressure supporting portion.

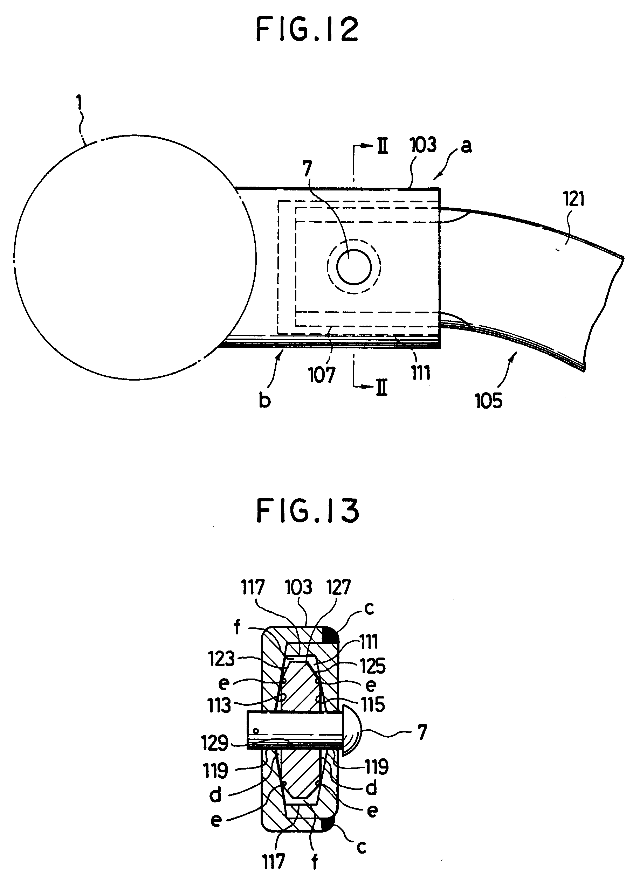

Figure 12 is a side view showing the main part of a cultivator nail supporting structure according to the third embodiment of the present invention. Figure 13 is a cross sectional view taken along the line II-II shown in Fig. 12.

The periphery of the rotation shaft 1 is provided radially with a plurality of nail holders 3 which are welded thereto spaced properly apart from each other.

Each nail holder 3 is constituted by overlapping the upper and lower end faces of one channel like steel plate with the upper and lower end faces of the other channel like steel plate. The peripheral ends of the nail holder 3 are formed solidly with welded portions C. A holder hole 111 of the nail holder 3 comprises fitting pressure supporting portions 113 and 115. The thickness of the side faces of the holder hole 111 becomes thinner from the overlapped end faces toward a stopper pin hole 119 which is provided at an intermediate height in symmetrical positions on the right and left side faces of the holder hole 111. The holder hole 111 is provided with stopper portions 117 which are formed on faces being in parallel with the pin hole 119 on the sides of the overlapped end faces of the fitting pressure supporting portions 113 and 115.

The cultivator nail 5 which is inserted freely removable into the holder hole 111 comprises a held portion 107 and a blade portion 121 (partly shown in the figures).

The intermediate body of the held portion 107 on the right and left side portions are formed with parallel surfaces which are spaced apart from the fitting pressure supporting portions 113 and 115 of the nail holder 3 with a gap "d". The upper and lower ends of said parallel surfaces are formed in slant faces 123 and 125 which have a slant angle larger than that of the slant faces of the fitting pressure supporting portions 113 and 115 of the nail holder 3. The top and bottom ends of the parallel surfaces are formed in parallel surfaces 127, each having a width shorter than the width of the parallel surface of the stopper portion 117 of the nail holder 3. When a stopper pin 7 is inserted from the pin hole 119 of the nail holder 3 into the pin hole 129, the cultivator nail 5, with contacting portions "e" which are intersections of the parallel faces and the slant faces 123 and 125, abuts against the fitting pressure supporting portions 113 and 115 adjacent to the upper and lower ends of the holder hole 111. Between the parallel surfaces 127 on the upper and lower ends of the held portion 107 and the stopper portion 117 of the nail holder 3, there is a gap "f".

The held portion 107 of the cultivator nail 5 is inserted into the holder hole 111 of the nail holder 3, and the stopper pin 7 is inserted into the pin hole 119 of the nail holder 3 and the pin hole 129 of the cultivator nail 5 so that the cultivator nail 5 is removably fixed to the nail holder 3. A cotter pin (not shown) is fitted to the stopper pin 7 to prevent the fall of the pin 7.

The operation of the embodiment 3 will be described. A cultivator is driven to rotate the cultivator shaft 1. When the cultivator nail 5 starts to cultivate the ground, the cultivator nail 5 receives reaction force from the ground through the blade portion 121. As a result, the held portion 107 is rotated around the stopper pin 7 relative to the nail holder 3 so that the contacting portion C of the face side "a" and the contacting portion C of the back side "b" are pressed against the fitting pressure supporting portions 113 and 115 respectively and supported. If the fitting pressure supporting portions 113 and 115 receive predetermined pressure, the parallel faces 125 of the face side "a" and the back side "b" of the held portion 107 are stopped by the front and rear stopper portions 117 of the nail holder 3, and thus they are supported by the fitting pressure of the fitting pressure supporting portions 113 and 115 and the resistance pressure of the stopper portions 117. Due to the press caused by the reaction force, the fitting pressure supporting portions 113 and 115 of the holder hole 111 at the intermediate height portion, which has thick wall, near the stopper pin 7 of the nail holder 3 are resiliently enlarged toward the axial direction of the stopper pin 7. In this way, the held portion 107 can be strongly and surely supported in the nail holder 3 without using fitting tools such as a bolt and nut.

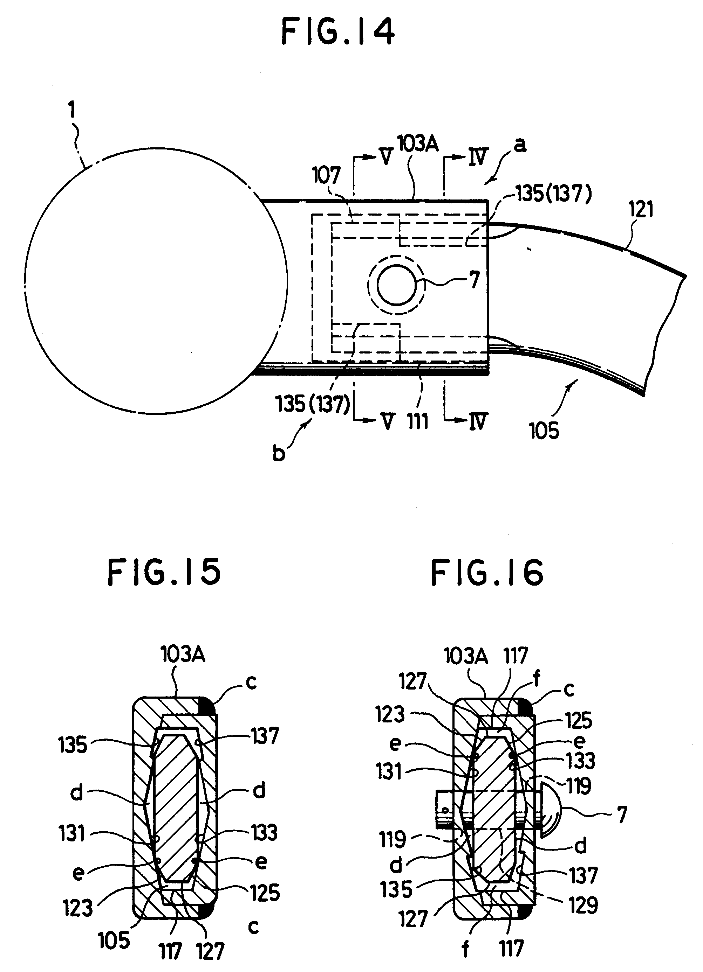

Figures 14 to 16 show the fourth embodiment of the present invention.

Fitting pressure supporting portions 131 and 133 comprise slant faces formed on the side walls of the holder hole 111. At the front end portion of the face side "a" and at the base portion of the back side "b" of the fitting pressure supporting portions 131 and 133, there are provided fitting pressure releasing portions 135 and 137, which do not apply the fitting pressure, between the nail holder 3A and the held portion 107 of the cultivator nail 5.

Similar to the third embodiment, the cultivator shaft 1 is rotated to cultivate the ground by the cultivator nail 5 which receives the reaction force from the ground through the blade portion 121. Due to this, the held portion 107 rotates relative to the nail holder 3A so that the held portion 107 is supported by the fitting pressure of the fitting pressure supporting portions 131 and 133 of the nail holder 3A and the resistance pressure of the stopper portion 117. To remove the cultivator nail 5, which is supported by the fitting pressure and the resistance pressure, from the nail holder 3A, the cultivator nail 5 is hit by a wooden hammer, etc., to rotate the held portion 107 in the reverse direction to release the fitting pressure of the fitting pressure supporting portions 131 and 133 of the nail holder 3A. In this case, the held portion 107 on the opposite side of the cultivator nail 5 is sometimes pressed against the nail holder 3A and caught therein. However, the nail holder 3A according to the present invention is provided with the fitting pressure releasing portions 135 and 137 by which the held portion 107 will not be caught by the nail holder 3A if the held portion 107 is rotated in the opposite direction. Therefore, when the held portion 107 is rotated in an opposite direction, the held portion 107 will not caught by the nail holder 3A. As a result, the cultivator nail is easily removed.

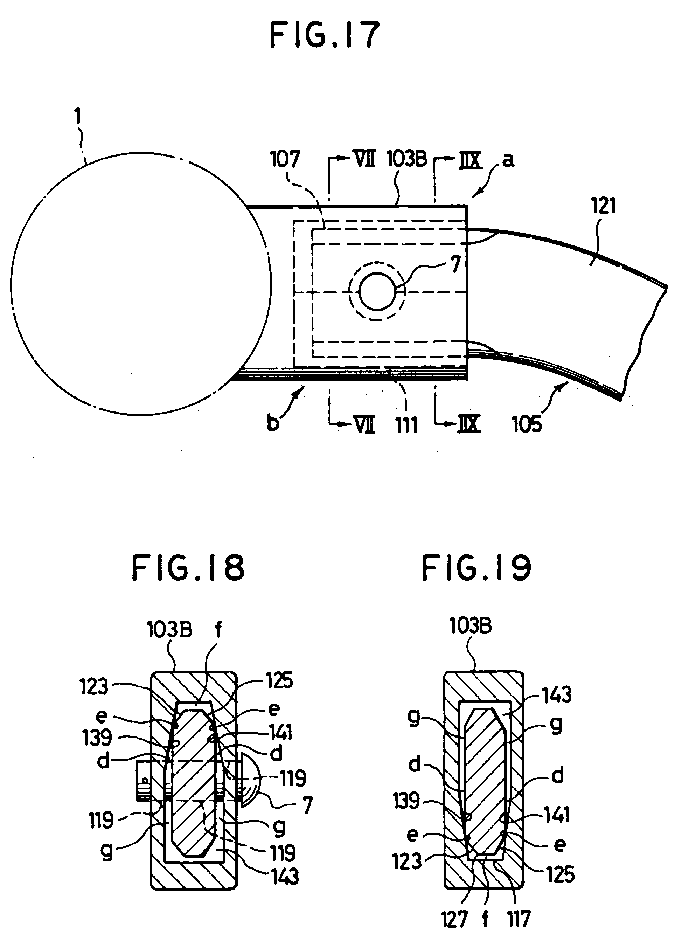

Figures 17 to 19 show the fifth embodiment of the present invention.

The nail holder 3B is provided, on its front side with the pin hole 119 being the center, with fitting pressure supporting portions 139 and 141 on the back side "b", and, on the face side "a", with a fitting pressure releasing portion 143 which comprises parallel faces having a proper gap "g" from the parallel faces of the held portion 107. On the base portion with the pin hole 119 being the center, the nail holder 3B is provided with the fitting pressure supporting portions 139 and 141 formed on the face side "a", and, on the back side "b", with a fitting pressure releasing portion 143 which comprises parallel faces having a proper gap "g" from the parallel faces of the held portion 107.

Similar to the fourth embodiment, the held portion 107 will not be caught by the nail holder 3B when the held portion 107 is rotated in an opposite direction so that the cultivator nail 5 may easily be removed.

As mentioned in the above, the present invention provides a cultivator nail supporting structure which holds resiliently and strongly the cultivator nail when the cultivator nail receives external force and keep holding the cultivator nail even if the external force is removed, and holds stronger the cultivator nail according to the increase of the external force. Further, the structure can receive the end of the cultivator nail when the external force exceedingly applied to the nail, thereby protecting the slant faces from being damaged due to the application of force exceeding the elastic limit of the material of the nail holder. Due to the fitting force releasing portions provided for the structure, the cultivator nail can easily be fitted to and removed from the nail holder.

## Claims

1. A cultivator nail supporting structure comprising;

   at least one cultivator nail (25, 55, 105) comprising a blade portion (121) and a held portion (26, 56, 107);

   a rotational driving shaft (1);

   at least one nail holder (23, 50, 103 103A, 103B);

   a pin (7) extending through a light aperture in said nail holder (23, 50, 103, 103A, 103B) and said held portion (26, 56, 107) received in said nail holder;

   said nail holder (23, 50, 103, 103A, 103B) having a hollow portion (24, 111) being dimensioned and configured to removably receive said held portion (26, 56, 107) therein; and

   said hollow portion (24, 111) and said held portion (26, 56, 107) being dimensioned to accommodate limited rotational movement of said held portion (26, 56, 107) relative to said nail holder (23, 50, 103, 103A, 103B) about the axis of said pin (7);

   wherein at least a part of said hollow portion (24, 111) for receiving said held portion (26, 56, 107) of said cultivator nail (25, 55, 105) is defined by confronting oppositely inclined interior faces (28a, 28b, 29a, 29b, 57a, 57b, 60a, 60b, 131, 133, 139, 141) between which said held portion (26, 56, 107) is firmly received when said cultivator nail (25, 55, 105) is rotated to cultivate the ground and by confronting parallel stop surfaces (40, 41, 63, 64, 117);

   wherein the confronting oppositely inclined interior faces (28a, 28b, 29a, 29b, 57a, 57b, 60a, 60b, 131, 133, 139, 141) being arranged so that first portions (30a, 30b, 31a, 31b, 59a, 59b, 62a, 62b, e) of said held portion (26, 56, 107) rotate between and into wedged engagement with the confronting oppositely inclined interior faces (28a, 28b, 29a, 29b, 57a, 57b, 60a, 60b, 131, 133, 139, 141) when said cultivator nail (25, 55, 105) is rotated to cultivate the ground; and the extent of rotation of said cultivator nail (25, 55, 105) relative to said nail holder (23, 50, 103, 103A, 103B) being limited by the abutment of second portions (38, 39, 127) of said held portion (26, 56, 107) against said confronting parallel stop surfaces (40, 41, 63, 64, 117),

**characterized in that,**

the cross-section of said held portion (26, 56) is orthogonal to a plane including a longitudinal axis of said held portion is substantially rectangular, and that the side walls (28a, 28b, 29a, 29b, 57a, 57b, 60a, 60b, 131, 133, 139, 141) of said hollow portion (24, 111) of said nail holder (23, 50, 103, 103A, 103B) are outwardly curved respectively, a distance between said side walls being shorter at top and/or bottom ends thereof than the cross-sectional width of said held portion (26, 56, 107) and longer at the intermediate part than the cross-section width of said held portion and that said hollow portion (24, 111) of said nail holder (23, 50, 103, 103A, 103B) is provided with a first and a second escape portion which have wider cross-sectional widths respectively than the cross-sectional width of said held portion (26, 56, 107), the first escape portion being provided at the upper side of said hollow portion (24, 111) from the mouth of said hollow portion (24, 111) to the middle of the depth of said hollow portion (24, 111), the second escape portion being provided at the lower side of said hollow portion (24, 111) from the middle of the depth of said hollow portion (24, 111) to the bottom of said hollow portion (24, 111).

2. A cultivator nail supporting structure comprising;

   at least one cultivator nail (25, 55, 105) comprising a blade portion (121) and a held portion (26, 56, 107);

   a rotational driving shaft (1);

   at least one nail holder (23, 50, 103 103A, 103B);

   a pin (7) extending through a light aperture in said nail holder (23, 50, 103, 103A, 103B) and said held portion (26, 56, 107) received in said nail holder;

   said nail holder (23, 50, 103, 103A, 103B) having a hollow portion (24, 111) being dimensioned and configured to removably receive said held portion (26, 56, 107) therein; and

said hollow portion (24, 111) and said held portion (26, 56, 107) being dimensioned to accommodate limited rotational movement of said held portion (26, 56, 107) relative to said nail holder (23, 50, 103, 103A, 103B) about the axis of said pin (7);

wherein at least a part of said hollow portion (24, 111) for receiving said held portion (26, 56, 107) of said cultivator nail (25, 55, 105) is defined by confronting oppositely inclined interior faces (28a, 28b, 29a, 29b, 57a, 57b, 60a, 60b, 131, 133, 139, 141) between which said held portion (26, 56, 107) is firmly received when said cultivator nail (25, 55, 105) is rotated to cultivate the ground and by confronting parallel stop surfaces (40, 41, 63, 64, 117);

wherein the confronting oppositely inclined interior faces (28a, 28b, 29a, 29b, 57a, 57b, 60a, 60b, 131, 133, 139, 141) being arranged so that first portions (30a, 30b, 31a, 31b, 59a, 59b, 62a, 62b, e) of said held portion (26, 56, 107) rotate between and into wedged engagement with the confronting oppositely inclined interior faces (28a, 28b, 29a, 29b, 57a, 57b, 60a, 60b, 131, 133, 139, 141) when said cultivator nail (25, 55, 105) is rotated to cultivate the ground; and the extent of rotation of said cultivator nail (25, 55, 105) relative to said nail holder (23, 50, 103, 103A, 103B) being limited by the abutment of second portions (38, 39, 127) of said held portion (26, 56, 107) against said confronting parallel stop surfaces (40, 41, 63, 64, 117),

**characterized in that,**

said hollow portion (24, 111) of said nail holder (23, 50, 103, 103A, 103B) comprises;

a first portion which starts from the mouth of said hollow portion (24, 111) and ends about the middle of the depth of said hollow portion, the side walls (28a, 28b 139, 141) of the lower part of said first portion being slanted toward each other such that the distance between said side walls (28a, 28b 139, 141) is shorter at the lower end than the cross-sectional width of said held portion (26, 107) and longer adjacent to the center than said width, the side walls other than said slanted portion of the first portion being in parallel with the side walls of said held portion (26, 107) with a certain clearance (g) being kept between them; and

a second portion which starts from the middle of the depth of said hollow portion (24, 111) and ends at the deepest end of said hollow portion (24, 111) the side walls (29a, 29b 139, 141) of the upper part of said second portion being slanted toward each other such that the distance between said side walls (29a, 29b 139, 141) is shorter at the upper end than the cross-sectional width of said held portion (26, 107) and longer adjacent to the center than said width, the side walls, other than said slanted portion of said second portion being in parallel with the side walls of said held portion (26, 107) with a certain clearance (g) being kept between them.

3.  A cultivator nail supporting structure comprising;

at least one cultivator nail (25, 55, 105) comprising a blade portion (121) and a held portion (26, 56, 107);

a rotational driving shaft (1);

at least one nail holder (23, 50, 103 103A, 103B);

a pin (7) extending through a light aperture in said nail holder (23, 50, 103, 103A, 103B) and said held portion (26, 56, 107) received in said nail holder;

said nail holder (23, 50, 103, 103A, 103B) having a hollow portion (24, 111) being dimensioned and configured to removably receive said held portion (26, 56, 107) therein; and

said hollow portion (24, 111) and said held portion (26, 56, 107) being dimensioned to accommodate limited rotational movement of said held portion (26, 56, 107) relative to said nail holder (23, 50, 103, 103A, 103B) about the axis of said pin (7);

wherein at least a part of said hollow portion (24, 111) for receiving said held portion (26, 56, 107) of said cultivator nail (25, 55, 105) is defined by confronting oppositely inclined interior faces (28a, 28b, 29a, 29b, 57a, 57b, 60a, 60b, 131, 133, 139, 141) between which said held portion (26, 56, 107) is firmly received when said cultivator nail (25, 55, 105) is rotated to cultivate the ground and by confronting parallel stop surfaces (40, 41, 63, 64, 117);

wherein the confronting oppositely inclined interior faces (28a, 28b, 29a, 29b, 57a, 57b, 60a, 60b, 131, 133, 139, 141) being arranged so that first portions (30a, 30b, 31a, 31b, 59a, 59b, 62a, 62b, e) of said held portion (26, 56, 107) rotate between and into wedged engagement with the confronting oppositely inclined interior faces (28a, 28b, 29a, 29b, 57a, 57b, 60a, 60b, 131, 133, 139, 141) when said cultivator nail (25, 55, 105) is rotated to cultivate the ground; and the extent of rotation of said cultivator nail (25, 55, 105) relative to said nail holder (23, 50, 103, 103A, 103B) being limited by the abutment of second portions (38, 39, 127) of said held portion (26, 56, 107) against said confronting parallel stop surfaces (40, 41, 63, 64, 117),

**characterized in that**,

the side walls of said hollow portion (24, 111) of said nail holder (23, 50, 103, 103A, 103B) are outwardly curved respectively, and said held portion (26, 56, 107) of said cultivator nail comprises;

a first portion which starts from the end face of said held portion (26, 56, 107) and ends about the middle of the length of said held portion (26, 56, 107), the side walls of the upper part of said first portion extending in parallel with each other such that the distance between said parallel side walls (59a, 59b) is longer than the distance at upper end of the side walls of said hollow portion (24, 111), the side walls of said first portion other than said parallel portion extending in parallel with the side walls of said hollow portion (24, 111) with a certain clearance being kept between them; and

a second portion which starts from the middle of the lengths of said held portion (26, 56, 107) and ends at the end of said held portion on the blade side (121), the side walls of the lower part of said second portion extending in parallel with each other such that the distance between said parallel side walls is longer than the distance at lower end of the side walls of said hollow portion (24, 111), the side walls of said second portion other than said parallel portion extending in parallel with the side walls of said hollow portion (24, 111) with a certain clearance being kept between them.

4. A cultivator nail supporting structure according to one of the claims 1 to 3, wherein said nail holder (23, 50, 103, 103A, 103B) comprising two channel-like steel plates which are overlappingly coupled and welded with each other with their open sides facing each other.

5. A cultivator nail supporting structure according to one of the claims 1 to 4, wherein the top and bottom faces of said held portion (26, 56, 107) are spaced apart from the top and bottom inner faces of said hollow portion (24, 111) of said nail holder (23, 50, 103, 103A, 103B) with a predetermined clearance.

6. A cultivator nail supporting structure comprising:

at least one cultivator nail (105) comprising a blade portion (121) and a held portion (107);

a rotational driving shaft (1);

at least one nail holder (103, 103A, 103B);

a pin (7) extending through a light aperture in said nail holder (103, 103A, 103B) and said held portion (107) received in said nail holder;

said nail holder (103, 103A, 103B) having a hollow portion (111) being dimensioned and configured to removably receive said held portion (107) therein; and

said hollow portion (111) and said held portion (107) being dimensioned to accommodate limited rotational movement of said held portion (107) relative to said nail holder (103, 103A, 103B) about the axis of said pin (7),

wherein at least a part of said hollow portion (111) for receiving said held portion (107) of said cultivator nail (105) is defined by confronting oppositely inclined interior faces (113, 115, 131, 133, 139, 141) between which said held portion (107) is firmly received when said cultivator nail (105) is rotated to cultivate the ground and by confronting parallel stop surfaces (117);

**characterized in that**,

said held portion (107) at upper and lower parts thereof has inclined side surfaces (123, 125) having an inclination angle which is larger than that of said confronting oppositely inclined interior faces (113, 115, 131, 133, 139, 141) of said nail holder (103, 103A, 103B) and the side surfaces other than said inclined side surfaces (123, 125) of said held portion (107) are spaced apart from said confronting oppositely inclined interior faces (113, 115, 131, 133, 141) of said nail holder (103, 103A, 103B) with a certain clearance (d) so that first contacting portions (e) which are intersections of said inclined side surfaces (123, 125) and the side surfaces other than said inclined side surfaces (123, 125) of said held portion (107) are wedged between and into said confronting oppositely inclined interior faces (113, 115, 131, 133, 139, 141) when said cultivator nail (105) is rotated to cultivate the ground; and

that the extent of rotation of said cultivator nail (105) relative to said nail holder (103, 103A, 103B) being limited by the abutment of second contacting portions (127) of said held portion (107) against said confronting parallel stop surfaces (117).

7. The cultivator nail supporting structure according to claim 6, wherein fitting pressure releasing portions are provided at an intermediate height in symmetrical positions on the right and left side faces of the nail holder (103).

**Revendications**

1. Structure de support de dents de cultivateur comprenant:

au moins une dent de cultivateur (25, 55, 105) comprenant une partie formant lame (121) et une partie maintenue (26, 56, 107);

un arbre d'entrainement en rotation (1);

au moins un support de dent (23, 50, 103, 103A, 103B);

une broche (7) traversant une ouverture ménagée dans ledit support de dent (23, 50, 103, 103A, 103B) et ladite partie maintenue (26, 56, 107), logée dans ledit support de dent;

ledit support de dent (23, 50, 103, 103A, 103B) ayant une partie creuse (24, 111) de dimension et de configuration telles que ladite partie maintenue (26, 56, 107) peut y être logée de façon amovible; et

ladite partie creuse (24, 111) et ladite partie maintenue (26, 56, 107) ayant des dimensions autorisant un mouvement de rotation limité de ladite partie maintenue (26, 56, 107) par rapport audit support de dent (23, 50, 103, 103A, 103B) autour de l'axe de ladite broche (7);

dans laquelle au moins une partie de ladite partie creuse (24, 111) destinée à recevoir ladite partie maintenue (26, 56, 107) de ladite dent de cultivateur (25, 55, 105) est définie par des faces intérieures inclinées opposées l'une vers l'autre en vis-à-vis (28a, 28b, 29a, 29b, 57a, 57b, 60a, 60b, 131, 133, 139, 141) entre lesquelles ladite partie maintenue (26, 56, 107) est fermement reçue lorsque ladite dent de cultivateur (25, 55, 105) est mise en rotation pour labourer le sol et par des surfaces d'arrêt parallèle en vis-à-vis (40, 41, 63, 64, 117);

les faces intérieures inclinées opposées l'une à l'autre en vis-à-vis (28a, 28b, 29a, 29b, 57a, 57b, 60a, 60b, 131, 133, 139, 141) étant disposées de façon à ce que des premières parties (30a, 30b, 31a, 31b, 59a, 59b, 62a, 62b, e) de ladite partie maintenue (26, 56, 107) tournent entre les faces intérieures inclinées opposées l'une vers l'autre en vis-à-vis (28a, 28b, 29a, 29b, 57a, 57b, 60a, 131, 133, 139, 141), et en s'engageant par coincement avec elles, lorsque ladite dent de cultivateur (25, 55, 105) est mise en rotation pour labourer le sol; et le degré de rotation de ladite dent de cultivateur (25, 55, 105) par rapport audit support de dent (23, 50, 103, 103A, 103B) étant limité par le fait que les secondes parties (38, 39, 127) de ladite partie maintenue (26, 56, 107) butent sur lesdites surfaces d'arrêt parallèles en vis-à-vis (40, 41, 63, 64, 117),

**caractérisée en ce que**:

la section transversale de ladite partie maintenue (26, 56) est orthogonale à un plan comprenant un axe longitudinal de ladite partie maintenue, en ce qu'elle est sensiblement rectangulaire et en ce que les parois latérales (28a, 28b, 29a, 29b, 57a, 57b, 60a, 60b, 131, 133, 139, 141) de ladite partie creuse (24, 111) dudit support de dent (23, 50, 103, 103A, 103B) sont respectivement incurvées vers l'extérieur, la distance séparant lesdites parois latérales étant plus faible à leurs extrémités supérieures et/ou inférieures que la largeur de la section transversale de ladite partie maintenue (26, 56, 107) et plus grande dans leurs parties intermédiaires que la largeur de la section transversale de ladite partie maintenue, et en ce que ladite partie creuse (24, 111) dudit support de dent (23, 50, 103, 103A, 103B) est munie d'une première et d'une seconde parties d'échappement qui ont des largeurs de section transversale respectives plus larges que la largeur de la section transversale de ladite partie maintenue (26, 56, 107), la première partie d'échappement étant disposée sur le côté supérieur de ladite partie creuse (24, 111) de l'ouverture de ladite partie creuse (24, 111) au milieu de la profondeur de ladite partie creuse (24, 111), la seconde partie d'échappement étant disposée sur le côté inférieur de ladite partie creuse (24, 111) du milieu de la profondeur de ladite partie creuse (24, 111) au fond de ladite partie creuse (24, 111).

2. Structure de support de dents de cultivateur comprenant:

au moins une dent de cultivateur (25, 55, 105) comprenant une partie formant lame (121) et une partie maintenue (26, 56, 107):

un arbre d'entrainement en rotation (1);

au moins un support de dent (23, 50, 103, 103A, 103B);

une broche (7) traversant une ouverture ménagée dans ledit support de dent (23, 50, 103, 103A, 103B) et ladite partie maintenue (26, 56, 107), logée dans ledit support de dent;

ledit support de dent (23, 50, 103, 103A, 103B) ayant une partie creuse (24, 111) de dimension et de configuration telles que ladite partie maintenue (26, 56, 107) peut y être logée de façon amovible; et

ladite partie creuse (24, 111) et ladite partie maintenue (26, 56, 107) ayant des dimensions autorisant un mouvement de rotation limité de ladite partie maintenue (26, 56, 107) par rapport audit support de dent (23, 50, 103, 103A, 103B) autour de l'axe de ladite broche (7);

au moins une partie de ladite partie creuse (24, 111) destinée à recevoir ladite partie maintenue (26, 56, 107) de ladite dent de cultivateur (25, 55, 105) étant définie par des faces intérieures inclinées opposées l'une vers l'autre en vis-à-vis (28a, 28b, 29a, 29b, 57a, 57b, 60a, 60b, 131, 133, 139, 141) entre lesquelles ladite partie maintenue (26, 56, 107) est fermement reçue lorsque ladite dent de cultivateur (25, 55, 105) est mise en rotation pour labourer le sol et par des surfaces d'arrêt parallèles en vis-à-vis (40, 41, 63, 64, 117);

les faces intérieures inclinées opposées l'une à l'autre en vis-à-vis (28a, 28b, 29a, 29b, 57a, 57b, 60a, 60b, 131, 133, 139, 141) étant disposées de façon à ce que des premières parties (30a, 30b, 31a, 31b, 59a, 59b, 62a, 62b, e) de ladite partie maintenue (26, 56, 107) tournent entre les faces intérieures inclinées opposées l'une vers l'autre en vis-à-vis (28a, 23b, 29a, 29b, 57a, 57b, 60a, 60b, 131, 133, 139, 141), et s'engageant par coincement avec elles, lorsque ladite dent de cultivateur (25, 55, 105) est mise en rotation pour labourer le sol; et le degré de rotation de ladite dent de cultivateur (25, 55, 105) par rapport audit support de dent (23, 50, 103, 103A, 103B) étant limité par le fait que les secondes parties (38, 39, 127) de ladite partic maintenue (26, 56, 107) butent sur lesdites surfaces d'arrêt parallèles en vis-à-vis (40, 41, 63, 64, 117),

**caractérisée en ce que:**

ladite partie creuse (24, 111) dudit support de dent (23, 50, 103, 103A, 103B) comprend:

une première partie qui part de l'ouverture de ladite partie creuse (24, 111) et se termine approximativement au milieu de la profondeur de ladite partie creuse, lesdites parois latérales (28a, 28b, 139, 141) de la partie inférieure de ladite première partie étant inclinées l'une vers l'outre de telle façon que la distance entre lesdites parois latérales (28a, 28b, 139, 141) soit plus courte à l'extrémité inférieure que la largeur de la section transversale de ladite partie maintenue (26, 107) et plus longue au voisinage du centre que ladite largeur, les parois latérales autres que ladite partie inclinée de la première partie étant parallèles aux parois latérales de ladite partie maintenue (26, 107), un certain interstice (g) étant maintenu entre elles; et

une seconde partie qui part du milieu de la profondeur de ladite partie creuse (28, 111) et se termine à l'extrémité la plus profonde de ladite partie creuse (24, 111), les parois latérales (29a, 29b, 139, 141) de la partie supérieure de ladite seconde partie étant inclinées l'une vers l'autre de façon à ce que la distance entre lesdites parois latérales (29a, 29b, 139, 141) soit plus courte à l'extrémité supérieure que la largeur de la section transversale de ladite partie maintenue (26, 107) et plus longue au voisinage du centre que ladite largeur, les parois latérales autres que ladite partie inclinée de ladite seconde partie étant parallèles aux parois latérales de ladite partie maintenue (26, 107), un certain interstice (g) étant maintenu entre elles.

3. Structure de support de dents de cultivateur comprenant:

au moins une dent de cultivateur (25, 55, 105) comprenant une partie formant lame (121) et une partie maintenue (26, 56, 107);

un arbre d'entrainement en rotation (1);

au moins un support de dent (23, 50, 103, 103A, 103B);

une broche (7) traversant une ouverture ménagée dans ledit support de dent (23, 50, 103, 103A, 103B) et ladite partie maintenue (26, 56, 107), logée dans ledit support de dent;

ledit support de dent (23, 50, 103, 103A, 103B) ayant une partie creuse (24, 111) de dimension et de configuration telles que ladite partie maintenue (26, 56, 107) peut y être logée de façon amovible; et

ladite partie creuse (24, 111) et ladite partie maintenue (26, 56, 107) ayant des dimensions autorisant un mouvement de rotation limité de ladite partie maintenue (26, 56, 107) par rapport audit support de dent (23, 50, 103, 103A, 103B) autour de l'axe de ladite broche (7);

dans laquelle au moins une partie de ladite partie creuse (24, 111) destinée à recevoir ladite partie maintenue (26, 56, 107) de ladite dent de cultivateur (25, 55, 105) est définie par des faces intérieures inclinées opposées l'une vers l'autre en vis-à-vis (28a, 28b, 29a, 29b, 57a, 57b, 60a, 60b, 131, 133, 139, 141) entre lesquelles ladite partie maintenue (26, 56, 107) est fermement reçue lorsque ladite dent de cultivateur (25, 55, 105) est mise en rotation pour labourer le sol et par des surfaces d'arrêt parallèles en vis-à-vis (40, 41, 63, 64, 117);

les faces intérieures inclinées opposées l'une à l'autre en vis-à-vis (28a, 28b, 29a, 29b, 57a, 57b, 60a, 60b, 131, 133, 139, 141) étant disposées de façon à ce que des premières parties (30a, 30b, 31a, 31b, 59a, 59b, 62a, 62b, e) de ladite partie maintenue (26, 56, 107) tournent entre les faces intérieures inclinées opposées l'une vers l'autre en vis-à-vis (28a, 28b, 29a, 29b, 57a, 57b, 60a, 131, 133, 139, 141), et s'engageant par coincement avec elles, lorsque ladite dent de cultivateur (25, 55, 105) est mise en rotation pour labourer le sol; et le degré de rotation de ladite dent de cultivateur (25, 55, 105) par rapport audit support de dent (23, 50, 103, 103A, 103B) étant limité par le fait que les secondes parties (38, 39, 127) de ladite partie maintenue (26, 56, 107) butent sur lesdites surfaces d'arrêt parallèles en vis-à-vis (40, 41, 63, 64, 117),

**caractérisée en ce que:**

les parois latérales de ladite partie creuse (24, 111) dudit support de dent (23, 50, 103, 103A, 103B) sont respectivement incurvées vers l'extérieur, et en ce que ladite partie maintenue (26, 56, 107) de ladite dent de cultivateur comprend:

une première partie qui part de la face d'extrémité de ladite partie maintenue (26, 56, 107) et se termine approximativement au milieu de la longueur de ladite partie maintenue (26, 56, 107), les parois latérales de la partie supérieure de ladite première partie s'étendant parallèlement l'une à l'autre de telle façon que la distance entre lesdites parois latérales parallèles (59a, 59b) soit plus longue que la distance à l'extrémité supérieure des parois latérales de ladite partie creuse (24, 111),les parois latérales de ladite première partie autres que ladite partie parallèle s'étendant parallèlement aux parois latérales de ladite partie creuse (24, 111), un certain interstice étant maintenu entre elles; et

une seconde partie qui part du milieu des longueurs de ladite partie maintenue (26, 56, 107) et se termine à l'extrémité de ladite partie maintenue sur la face (121) de la lame, les parois latérales de la partie inférieure de ladite seconde partie s'étendant parallèlement l'une à l'autre de façon à ce que la distance séparant lesdites parois latérales parallèles soit plus longue que la distance à l'extrémité inférieure des parois latérales de ladite partie creuse (24, 111), les parois latérales de ladite seconde partie autres que ladite partie parallèle, s'étendant parallèlement aux parois latérales de ladite partie creuse (24, 111), un certain interstice étant maintenu entre elles.

4. Structure de support de dents de cultivateur selon l'une des revendications 1 à 3, dans laquelle ledit support de dent (23, 50, 103, 103A, 103B) comprend deux plaques d'acier ayant la forme de canaux qui sont reliés et soudées l'une à l'autre en se chevauchant, leurs côtés ouverts faisant face l'un à l'autre.

5. Structure de support de dents de cultivateur selon l'une des revendications 1 à 4, dans laquelle les faces supérieure et inférieure de ladite partie maintenue (26, 56, 107) sont espacées des faces intérieures supérieure et inférieure de ladite partie creuse (24, 111) dudit support de dent (23, 50, 103, 103A, 103B) avec un interstice prédéterminé.

6. Structure de support de dents de cultivateur comprenant:

au moins une dent de cultivateur (105) comprenant une partie formant lame (121) et une partie maintenue (107);

un arbre d'entrainement en rotation (1);

au moins un support de dent (103, 103A, 103B);

une broche (7) traversant une ouverture ménagée dans ledit support de dent (103, 103A, 103B) et ladite partie maintenue (107)- ,logée dans ledit support de dent;

ledit support de dent (103, 103A, 103B) ayant une partie creuse (111) de dimension et de configuration telles que ladite partie maintenue (107) peut y être logée de façon amovible; et

ladite partie creuse (111) et ladite partie maintenue (107) ayant des dimensions autorisant un mouvement de rotation limité de ladite partie maintenue (107) par rapport audit support de dent (103, 103A, 103B) autour de l'axe de ladite broche (7);

dans laquelle au moins une partie de ladite partie creuse (111) destinée à recevoir ladite partie maintenue (107) de ladite dent de cultivateur (105) est définie par des faces intérieures inclinées opposées l'une vers l'autre en vis-à-vis (113, 115, 131, 133, 139, 141) entre lesquelles ladite partie maintenue (107) est fermement reçue lorsque ladite dent de cultivateur (105) est mise en rotation pour labourer le sol et par des surfaces d'arrêt parallèles en vis-à-vis (117);

**caractérisée en ce que:**

ladite partie maintenue (107) présente, dans ses parties supérieure et inférieure, des surfaces latérales inclinées (123, 125) ayant un angle d'inclinaison supérieur à celui desdites faces intérieures inclinées l'une vers l'autre en vis-à-vis (113, 115, 131, 133, 139, 141) dudit support de dent (103, 103A, 103B) et en ce que les surfaces latérales autres que lesdites surfaces latérales inclinées (123, 125) de ladite partie maintenue (107) sont espacées desdites faces intérieures inclinées l'une vers l'autre en vis-à-vis (113, 115, 131, 133, 139, 141) dudit support de dent (103, 103A, 103B) avec un certain interstice (d) de façon à ce que des premières parties de contact (e) qui sont des intersections desdites surfaces latérales inclinées (123, 125) avec les surfaces latérales autres que lesdites surfaces latérales inclinées (123, 125) de ladite partie maintenue (107), soient coincées entre et dans lesdites faces intérieures inclinées l'une vers l'autre en vis-à-vis (113, 115, 131, 133, 139, 141) lorsque ladite dent de cultivateur (105) est mise en rotation pour labourer le sol; et

en ce que le degré de rotation de ladite dent de cultivateur (105) par rapport audit support de dent (103, 103A, 103B) est limité par le fait que les secondes parties de contact (127) de ladite partie maintenue (107) butent sur lesdites surfaces d'arrêt parallèles en vis-à-vis (117).

7. Structure de support de dents de cultivateur selon la revendication 6, dans laquelle des parties de libération de la pression d'emboîtement sont prévues à une hauteur intermédiaire à des positions symétriques sur les faces latérales droite et gauche du support de dent (103).

**Patentansprüche**

1. Einrichtung zum Befestigen von Grubberzinken mit,

wenigstens einem Grubberzinken (25, 55, 105), der einen Scheidenbereich (121) und einen Haltebereich (25, 56, 107) aufweist;

einer Drehantriebswelle (1),

wenigstens einem Zinkenhalter (23, 50, 103, 103A, 103B);

einem Zapfen (7), der sich durch eine lichte Öffnung in dem Zinkenhalter (23, 50, 103, 103A, 103B) und dem Haltebereich (26, 56, 107) erstreckt, der in dem Zinkenhalter aufgenommen ist;

wobei der Zinkenhalter (23, 50, 103, 103A, 103B) einen hohlen Bereich (24, 111) aufweist, der so dimensioniert und konfiguriert ist, daß er entfernbar den Haltebereich (26, 56, 107) in sich aufnimmt; und

wobei der hohle Bereich (24, 111) und der Haltebereich (26, 56, 107) so dimensioniert sind, daß sie eine begrenzte Drehbewegung des Haltebereichs (26, 56, 107) bezüglich des Zinkenhalters (23, 50, 103, 103A, 103B) um die Achse des Zapfens (7) ermöglichen;

wobei wenigstens ein Teil des hohlen Bereichs (24, 111) zum Aufnehmen des Haltebereichs (26, 56, 107) des Grubberzinkens (25, 55, 105) definiert wird durch einander gegenüberliegende entgegengesetzt geneigte innere Seiten (28a, 28b, 29a, 29b, 57a, 57b, 60a, 60b, 131, 133, 139, 141) zwischen denen der Haltehereich (26, 56, 107) fest aufgenommen ist, wenn der Grubberzinken (25, 55, 105) gedreht wird, um den Boden zu bearbeiten, und durch einander gegenüberliegende parallele Anschlagoberflächen (40, 41, 63, 64, 117);

wobei die einander gegenüberliegenden entgegengesetzt geneigten inneren Seiten (28a, 28b, 29a, 29b, 57a, 57b, 60a, 60b, 131, 133, 139, 141) so angeordnet sind, daß erste Bereiche (30a, 30b, 31a, 31b, 59a, 59b, 62a, 62b, e) des Haltebereichs (26, 56, 107) dazwischen und in keilförmigem Eingriff mit den einander gegenüberliegenden entgegengesetzt geneigten inneren Seiten (28a, 28b, 29a, 29b, 57a, 57b, 60a, 60b, 131, 133, 139, 141) drehen, wenn der Grubberzinken (25, 55, 105) gedreht wird, um den Boden zu bearbeiten; und wobei das Maß der Drehung des Grubberzinkens (25, 55, 105) bezüglich des Zinkenhalters (23, 50, 103, 103A, 103B) durch den Anschlag von zweiten Bereichen (38, 39, 127) des Haltebereichs (26, 56, 107) gegen die einander gegenüberliegenden parallelen Stopflächen (40, 41, 63, 64, 117) begrenzt wird,

**dadurch gekennzeichnet**,

daß der Querschnitt des Haltebereichs (26, 56), der senkrecht zu einer Ebene verläuft, die die Längsachse des Haltebereichs enthält, im wesentlichen rechteckig ist und daß die Seitenwände (28a, 28b, 29a, 29b, 57a, 57b, 60a, 60b, 131, 133, 139, 141) des hohlen Bereichs (24, 111) des Zinkenhalters (23, 50, 103, 103A, 103B) entsprechend nach außen gebogen sind, wobei ein Abstand zwischen den Seitenwänden geringer an der Spitze und/oder am Boden davon ist als die Querschnittsbreite des Haltebereichs (26, 56, 107) und länger ist im Zwischenteil als die Querschnittsbreite des Haltebereichs, und daß der hohle Bereich (24, 111) des Zinkenhalters (23, 50, 103, 103a, 103B) mit einem ersten und einem zweiten Entweichbereich versehen ist, die entsprechend größere Querschnittsbreiten aufweisen als die Querschnittsbreite des Haltebereichs (26, 56, 107), wobei der erste Entweichbereich an der Oberseite des hohlen Bereichs (24, 111) von der Mündung des hohlen Bereichs (24, 111) zu der Mitte der Tiefe des hohlen Bereichs (24, 111), der zweite Entweichbereich an der Unterseite des hohlen Bereichs (24, 111) von der Mitte der Tiefe des hohlen Bereichs (24, 111) zu dem Boden des hohlen Bereichs (24, 111) ausgebildet ist.

2. Einrichtung zum Befestigen von Grubberzinken mit,

wenigstens einem Grubberzinken (25, 55, 105), der einen Scheidenbereich (121) und einen Haltebereich (25, 56, 107) aufweist;

einer Drehantriebswelle (1),

wenigstens einem Zinkenhalter (23, 50, 103, 103A, 103B);

einem Zapfen (7), der sich durch eine lichte Öffnung in dem Zinkenhalter (23, 50, 103, 103A, 103B) und dem Haltebereich (26, 56, 107) erstreckt, der in dem Zinkenhalter aufgenommen ist;

wobei der Zinkenhalter (23, 50, 103, 103A, 103B) einen hohlen Bereich (24, 111) aufweist, der so dimensioniert und konfiguriert ist, daß er entfernbar den Haltebereich (26, 56, 107) in sich aufnimmt; und

wobei der hohle Bereich (24, 111) und der Haltebereich (26, 56, 107) so dimensioniert sind, daß sie eine begrenzte Drehbewegung des Haltebereichs (26, 56, 107) bezüglich des Zinkenhalters (23, 50, 103, 103A, 103B) um die Achse Zapfens (7) ermöglichen;

wobei wenigstens ein Teil des hohlen Bereichs (24, 111) zum Aufnehmen des Haltebereichs (26, 56, 107) des Grubberzinkens (25, 55, 105) definiert wird durch einander gegenüberliegende entgegengesetzt geneigte innere Seiten (28a, 28b, 29a, 29b, 57a, 57b, 60a, 60b, 131, 133, 139, 141) zwischen denen der Haltebereich (26, 56, 107) fest aufgenommen ist, wenn der Grubberzinken (25, 55, 105) gedreht wird, um den Boden zu bearbeiten, und durch einander gegenüberliegende parallele Anschlagoberflächen (40, 41, 63, 64, 117);

wobei die einander gegenüberliegenden entgegengesetzt geneigten inneren Seiten (28a, 28b, 29a, 29b, 57a, 57b, 60a, 60b, 131, 133, 139, 141) so angeordnet sind, daß erste Bereiche (30a, 30b, 31,a, 31b, 59a, 59b, 62a, 62b, e) des Haltebereichs (26, 56, 107) dazwischen und in keilförmigem Eingriff mit den einander gegenüberliegenden entgegengesetzt geneigten inneren Seiten (28a, 28b, 29a, 29b, 57a, 57b, 60a, 60b, 131, 133, 139, 141) drehen, wenn der Grubberzinken (25, 55, 105) gedreht wird, um den Boden zu bearbeiten; und wobei das Maß der Drehung des Grubberzinkens (25, 55, 105) bezüglich des Zinkenhalters (23, 50, 103, 103A, 103B) durch den Anschlag von zweiten Bereichen (38, 39, 127) des Haltebereichs (26, 56, 107) gegen die einander gegenüberliegenden parallelen Stopflächen (40, 41, 63, 64, 117) begrenzt wird,

**dadurch gekennzeichnet**,

daß der hohle Bereich (24, 111) des Zinkenhalters (23, 50, 103, 103A, 103B) aufweist;

einen ersten Bereich, der von der Mündung des hohlen Bereichs (24, 111) beginnt und ungefähr in der Mitte der Tiefe des hohlen Bereichs endet, wobei die Seitenwände (28a, 28b, 139, 141) des unteren Teils des ersten Bereichs aufeinander zugeneigt sind, derart, daß der Abstand zwischen den Seitenwänden (28a, 28b, 139, 141) geringer ist am unteren Ende als die Querschnittsbreite des Haltebereichs (26, 107) und länger ist benachbart der Mitte als die Breite, wobei die anderen Seitenwände, nicht die geneigten Bereiche des ersten Bereichs parallel mit den Seitenwänden des Haltebereichs (26, 107) sind, wobei ein gewisser Spalt (g) zwischen ihnen beibehalten wird; und

einen zweiten Bereich, der von der Mitte der Tiefe des hohlen Bereichs (24, 111) beginnt und am tiefsten Ende des hohlen Bereichs (24, 111) endet, wobei die Seitenwände (29a, 29b, 139, 141) des oberen Teils des zweiten Bereichs aufeinander zugeneigt angeordnet sind, derart, daß der Abstand zwischen den Seitenwänden (29a, 29b, 139, 141) geringer ist am oberen Ende als die Querschnittsbreite des Haltebereichs (26, 107) und länger ist in der Nähe der Mitte als diese Breite, wobei die Seitenwände, die nicht die geneigten Bereiche des zweiten Bereichs sind, parallel sind zu den Seitenwänden des Haltebereichs (26, 107) mit einem bestimmten Spalt (g), der zwischen ihnen beibehalten wird.

3. Einrichtung zum Befestigen von Grubberzinken mit, wenigstens einem Grubberzinken (25, 55, 105), der einen Scheidenbereich (121) und einen Haltebereich (25, 56, 107) aufweist;

einer Drehantriebswelle (1),

wenigstens einem Zinkenhalter (23, 50, 103, 103A, 103B);

einem Zapfen (7), der sich durch eine lichte Öffnung in dem Zinkennalter (23, 50, 103, 103A, 103B) und dem Haltebereich (26, 56, 107) erstreckt, der in dem Zinkenhalter aufgenommen ist;

wobei der Zinkenhalter (23, 50, 103, 103A, 103B) einen hohlen Bereich (24, 111), der so dimensioniert und konfiguriert ist, daß er entfernbar den Haltebereich (26, 56, 107) in sich aufnimmt; und

wobei der hohle Bereich (24, 111) und der Haltebereich (26, 56, 107) so dimensioniert sind, daß sie eine begrenzte Drehbewegung des Haltebereichs (26, 56, 107) bezüglich des Zinkenhalters (23, 50, 103, 103A, 103B) um die Achse Zapfens (7) ermöglichen;

wobei wenigstens ein Teil des hohlen Bereichs (24, 111) zum Aufnehmen des Haltebereichs (26, 56, 107) des Grubberzinkens (25, 55, 105) definiert wird durch einander gegenüberliegende entgegengesetzt geneigte innere Seiten (28a, 28b, 29a, 29b, 57a, 57b, 60a, 60b, 131, 133, 139, 141) zwischen denen der Haltebereich (26, 56, 107) fest aufgenommen ist, wenn der Grubberzinken (25, 55, 105) gedreht wird, um den Boden zu bearbeiten, und durch einander gegenüberliegende parallele Anschlagoberflächen (40, 41, 63, 64, 117);

wobei die einander gegenüberliegenden entgegengesetzt geneigten inneren Seiten (28a, 28b, 29a, 29b, 57a, 57b, 60a, 60b, 131, 133, 139, 141) so angeordnet sind, daß erste Bereiche (30a, 30b, 31,a, 31b, 59a, 59b, 62a, 62b, e) des Haltebereichs (26, 56, 107) dazwischen und in keilförmigem Eingriff mit den einander gegenüberliegenden entgegengesetzt geneigten inneren Seiten (28a, 28b, 29a, 29b, 57a, 57b, 60a, 60b, 131, 133, 139, 141) drehen, wenn der Grubberzinken (25, 55, 105) gedreht wird, um den Boden zu bearbeiten; und wobei das Maß der Drehung des Grubberzinkens (25, 55, 105) bezüglich des Zinkenhalters (23, 50, 103, 103A, 103B) durch den Anschlag von zweiten Bereichen (38, 39, 127) des Haltebereichs (26, 56, 107) gegen die einander gegenüberliegenden parallelen Stopflächen (40, 41, 63, 64, 117) begrenzt wird,

**dadurch gekennzeichnet**,

daß die Seitenwände des hohlen Bereichs (24, 111) des Zinkenhalters (23, 50, 103, 103A, 103B) entsprechend nach außen gebogen sind, und daß der Haltebereich (26, 56, 107) des Grubberzinkens aufweist;

einen ersten Bereich, der an der Endseite des Haltebereichs (26, 56, 107) beginnt und ungefähr in der Mitte der Länge des Haltebereichs (26, 56, 107) endet, wobei die Seitenwände des oberen Teils des ersten Bereichs zueinander parallel verlaufen, derart, daß der Abstand zwischen den parallelen Seitenwänden (59a, 59b) länger ist als der Abstand am oberen Ende der Seitenwände des hohlen Bereichs (24, 111), wobei die Seitenwände des ersten Bereichs, die nicht der parallele Bereich sind, sich parallel zu den Seitenwänden des hohlen Bereichs (24, 111) erstrecken mit einem bestimmten Spalt, der zwischen ihnen beibehalten wird; und

einen zweiten Bereich, der von der Mitte der Länge des Haltebereichs (26, 56, 107) beginnt und am Ende des Haltebereichs auf der Scheidenseite (121) endet, wobei die Seitenwände des unteren Teils des zweiten Bereichs sich parallel zueinander derart erstrecken, daß der Abstand zwischen den parallelen Seitenwänden länger ist als der Abstand am unteren Ende der Seitenwände des hohlen Bereichs (24, 111), wobei die Seitenwände des zweiten Bereichs, die nicht die des parallelen Bereichs sind, sich parallel zu den Seitenwänden des hohlen Bereichs (24, 111) erstrecken, mit einem gewissen Spalt, der zwischen ihnen beibehalten wird.

4. Einrichtung zum Befestigen von Grubberzinken nach einem der Ansprüche 1 bis 3, wobei der Zinkenhalter (23, 50, 103, 103A, 103B) zwei kanalartige Stahlplatten aufweist, die überlappend miteinander verbunden und miteinander verschweißt sind, wobei ihre offenen Seiten einander gegenüberliegen.

5. Einrichtung zum Befestigen von Grubberzinken nach einem der Ansprüche 1 bis 4, wobei die Kopf- und Bodenseiten des Haltebereichs (26, 56, 107) von den inneren Kopf- und Bodenseiten des hohlen Bereichs (24, 111) des Zinkenhalters (23, 50, 103, 103A, 103B) mit einem bestimmten Spalt beabstandet sind.

6. Einrichtung zum Befestigen von Grubberzinken mit,

wenigstens einem Grubberzinken (105), der einen Scheidenbereich (121) und einen Haltebereich (107) aufweist;

einer Drehantriebswelle (1),

wenigstens einem Zinkenhalter (103, 103A, 103B);

einem Zapfen (7), der sich durch eine lichte Öffnung in dem Zinkenhalter (103, 103A, 103B) und dem Haltebereich (107) erstreckt, der in dem Zinkenhalter aufgenommen ist;

wobei der Zinkenhalter (103, 103A, 103B) einen hohlen Bereich (111) aufweist, der so dimensioniert und konfiguriert ist, daß er entfernbar den Haltebereich (107) in sich aufnimmt; und

wobei der hohle Bereich (111) und der Haltebereich (107) so dimensioniert sind, daß sie eine begrenzte Drehbewegung des Haltebereichs (107) bezüglich des Zinkenhalters (103, 103A, 103B) um die Achse Zapfens (7) zu ermöglichen;

wobei wenigstens ein Teil des hohlen Bereichs (111) zum Aufnehmen des Haltebereichs (107) des Grubberzinkens (105) definiert wird durch einander gegenüberliegende entgegengesetzt geneigte innere Seiten (113, 115, 131, 133, 139, 141) zwischen denen der Haltebereich (107) fest aufgenommen ist, wenn der Grubberzinken (105) gedreht wird, um den Boden zu bearbeiten, und durch einander gegenüberliegende parallele Stopflächen (117);

**dadurch gekennzeichnet**,

daß der Haltebereich (107), an dessen oberen und unteren Teilen geneigte Seitenflächen (123, 125) aufweist, die einen Neigungswinkel haben, der größer ist als jener der einander gegenüberliegend entgegengesetzt geneigten inneren Seiten (113, 115, 131, 133, 139, 141) des Zinkenhalters (103, 103A, 103B) und die Seitenflächen, die nicht die geneigten Seitenflächen (123, 125) des Haltebereichs (107) sind, von den einander gegenüberliegenden entgegengesetzt geneigten inneren Seiten (113, 115, 131, 133, 139, 141) des Zinkenhalters (103, 103A, 103B) mit einem bestimmten Abstand (d) beabstandet sind, so daß die ersten Berührungsbereiche (e) die Zwischenabschnitte der geneigten Seitenflächen (123, 125) sind und die Seitenflächen, die nicht die geneigten Seitenflächen (123, 125) des Haltebereichs (107) sind zwischen und in die einander gegenüberliegenden entgegengesetzt geneigten inneren Seiten (113, 115, 131, 133, 139, 141) geklemmt werden, wenn der Grubberzinken (105) gedreht wird, um den Boden zu bearbeiten; und

daß das Maß der Drehung des Grubberzinkens (105) bezüglich des Zinkenhalters (103, 103A, 103B) durch den Anschlag von zweiten Berührungsbereichen (127) des Haltebereichs (107) gegen einander gegenüberliegenden parallelen Stopflächen (117) begrenzt wird.

7. Einrichtung zum Befestigen von Grubberzinken nach Anspruch 6, wobei Paßdrucklösebereiche vorgesehen sind an einer Zwischenhöhe in symmetrischen Positionen an der rechten und linken Seitenfläche des Zinkenhalters (103).

# F I G . I

# F I G . 2

# FIG.3

# FIG.4

# FIG.5

# FIG. 6

# F I G . 7

# F I G . 8

# F I G . 9

20

# FIG.10

# FIG.11

# FIG.12

# FIG.13

# FIG.14

# FIG.15          FIG.16

# FIG.17

1

107 VII 103B IX a

121

7

b VII 111 IX 105

# FIG.18

103B f

123 125
e e
139 141
d d
119
7
119 g
g 119
143

# FIG.19

103B

143
g g
d d
139 141
e e
123 125
127 f 117